# EUROPÄISCHE PATENTSCHRIFT

(11) **EP 1 112 877 B1**
(45) Veröffentlichungstag und Bekanntmachung des Hinweises auf die Patenterteilung: **08.09.2004**
(21) Anmeldenummer: 00124186.8
(22) Anmeldetag: 08.11.2000
(51) Int. Cl.: B60J 7/12

(54) **Faltverdeck für ein Cabriolet-Fahrzeug**
Foldable top for convertible vehicle
Capote pliante pour véhicule convertible

(30) Priorität: 31.12.1999 DE 29923087 U
(43) Veröffentlichungstag der Anmeldung: 04.07.2001
(73) Patentinhaber: Wilhelm Karmann GmbH, D-49084 Osnabrück (DE)
(72) Erfinder: Heselhaus, Udo, 49479 Ibbenbühren (DE); Plassmeyer, Uwe, 49124 Georgsmarienhütte (DE); Rademacher, Udo, 49084 Osnabrück (DE); Ventker, Carsten, 49090 Osnabrück (DE)
(74) Vertreter: Busse & Busse Patentanwälte

(56) Entgegenhaltungen:
- EP-A- 0 811 517
- EP-B- 0 429 777
- EP-B- 0 521 307
- DE-A- 19 801 876
- DE-C- 4 441 668

## Beschreibung

Die Erfindung bezieht sich auf ein Faltverdeck für ein Cabriolet-Fahrzeug in einer Ausbildung gemäß dem Oberbegriff des Anspruchs 1.

Bei bekannten Cabriolet-Fahrzeugen dieser Art (DE 44 41 668 C1) ist ein Faltverdeck vorgesehen, dessen mit jeweiligen Gestängeschenkeln des Verdeckgestells verbundene, flexible Dachhaut zur Vermeidung von Überdehnungen bei der Öffnungs-bzw. Schließbewegung lösbar an dem heckseitigen Gestängeschenkel festgelegt und in dessen Bereich mittels eines Spannungsseiles in der Schließstellung fixiert ist. Bei Bewegung in die jeweilige Öffnungs- bzw. Schließstellung ist die Steuerung des Spannseiles aufwendig und bei deren denkbarer Ermüdung ist zwischen diesem und dem Gestängeschenkel ein Durchgriff in den Fahrgastraum nicht auszuschließen.

Die Erfindung befaßt sich mit dem Problem, ein Faltverdeck für ein Cabriolet-Fahrzeug zu schaffen, dessen mit geringem technischem Aufwand im Bereich der Gestängeschenkel gehaltene Dachhaut ermüdungsfrei mit dem Verdeckgestell verlagerbar ist, diese Verlagerung ohne Überbelastungen aufnehmen kann und auch eine optimale Abdeckung viersitziger Fahrgasträume ermöglicht.

Ausgehend von einem Faltverdeck nach dem Oberbegriff des Anspruchs löst die Erfindung diese Aufgabe mit den Merkmalen des kennzeichnenden Teils des Anspruchs 1. Hinsichtlich wesentlicher weiterer Ausgestaltungen wird auf die Ansprüche 2 bis 17 verwiesen.

Das erfindungsgemäße Faltverdeck ist im Bereich seiner Dachhautanbindung am Verdeckgestell mit paarweise gegenüberliegenden Verbindungseinheit versehen, die jeweils von einem der Gestängeschenkel und einem mit der Dachhaut verbundenen Rahmenabschnitt gebildet ist. Die Teile der Verbindungseinheit sind über eine Zwangsführung so gekoppelt, daß eine Relativbewegung zwischen dem jeweils randseitig erfaßten Bereich der Dachhaut und dem zugeordneten Gestängeschenkel möglich ist. Das permanent mit dem Verdeckgestell bzw. dem jeweiligen Rahmenabschnitt verbundene Verdeck, insbesondere eine flexible Dachhaut, kann bei einer jeweiligen Öffnungs- bzw. Schließbewegung des Verdeckgestells so verschoben werden, daß ohne Überspannungen eine materialschonende Verlagerung und Faltung des Verdecks erreicht wird und dabei auch Abdeckungen für größere Fahrgasträume, beispielsweise einen Vier-Personen-Wagen, optimal bewegbar sind.

Weitere Einzelheiten und vorteilhafte Wirkungen der Erfindung ergeben sich aus der nachfolgenden Beschreibung und der Zeichnung, in der ein Ausführungsbeispiel des Gegenstands der Erfindung näher veranschaulicht ist. In der Zeichnung zeigen:
- Fig. 1: eine perspektivische Rückansicht eines Cabriolet-Fahrzeuges mit einem Faltverdeck in Schließstellung,
- Fig. 2: eine vergrößerte Ausschnittsdarstellung des Verdeckgestells im Bereich heckseitiger Gestängeschenkel,
- Fig. 3: eine Ausschnittsdarstellung ähnlich Fig. 2 mit den Gestängeschenkeln in einer ersten Öffnungsphase,
- Fig. 4: eine Ausschnittsdarstellung ähnlich Fig. 3 mit den Gestängeschenkeln in heckseitiger Öffnungstellung,
- Fig. 5: eine Einzeldarstellung eines am Gestängeschenkel festlegbaren Rahmenabschnittes, und
- Fig. 6: eine Schnittdarstellung im Bereich des heckseitigen Gestängeschenkels mit dem Rahmenabschnitt gemäß einer Linie VI-VI in Fig. 1.

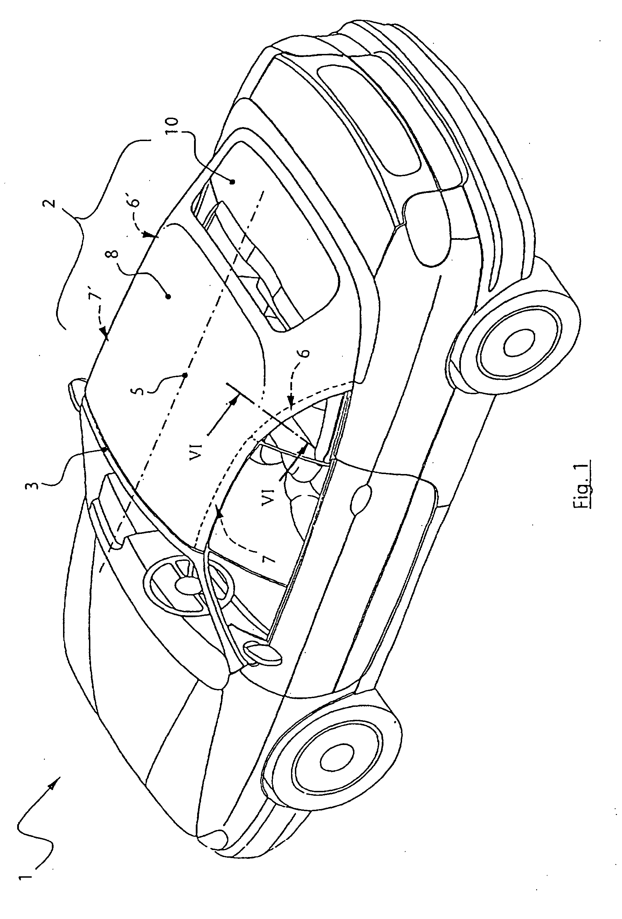

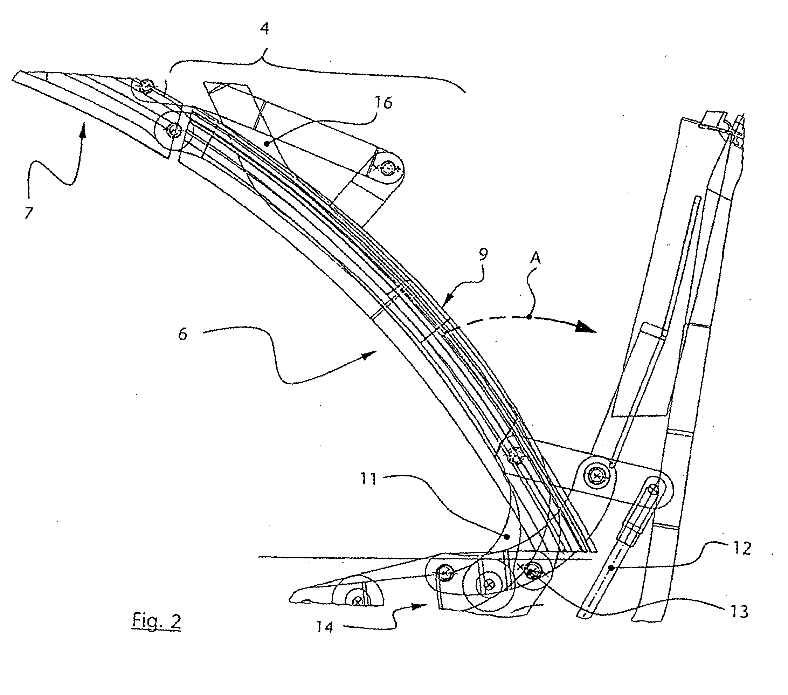

In Fig. 1 ist ein insgesamt mit 1 bezeichnetes Cabriolet-Fahrzeug dargestellt, dessen als Faltverdeck ausgebildetes Verdeck 2 aus der dargestellten, am Windschutzscheibenrahmen 3 anliegenden Schließstellung in eine heckseitige Öffnungsstellung verlagerbar ist. Das Faltverdeck 2 weist dabei ein schwenkbares Verdeckgestell 4 (Fig. 2) mit paarweise symmetrisch zur Längsmittelebene 5 des Fahrzeugs 1 gegenüberliegenden Gestängeschenkeln 6, 7 auf. In Fig. 2 bis 4 ist nur jeweils eine Seite des Verdeckgestells 4 veranschaulicht, wobei es sich versteht, daß den dargestellten Gestängeschenkeln 6 und 7 entsprechende Gestängeschenkel 6', 7' symmetrisch gegenüberliegen. Mit dieser Verdeckkonstruktion ist eine insbesondere flexible Dachhaut 8 des eine Heckscheibe 10 aufweisenden Faltverdecks 2 gehalten.

Das erfindungsgemäß ausgebildete Verdeckgestell 4 ist im Bereich zumindest eines Paares gegenüberliegenden Gestängeschenkel 6, 6' (bzw. 7, 7') mit einem jeweils die Dachhaut 8 tragenden Rahmenabschnitt 9 versehen, der bei der Öffnungs- bzw. Schließbewegung (Fig. 2 bis Fig. 4) relativ zum Gestängeschenkel 6 verlagerbar ist. Damit ist während der Bewegung des Verdecks 2 eine Minimierung der Verdeckstoffspannungen möglich bzw. sind Überspannungen und/oder ungewollte Knickungen der Dachhaut 8 vermieden. Gleichzeitig können mit dieser Konstruktion fehlende Stofflängen, die während einer Ablegebewegung des Faltverdecks 2 zwischen den Anbindungsbereichen von Dachhaut an Teilen des Verdeckgestells 4 entstehen können, überbrückt werden.

Mit dieser verlagerbaren Anbindung im Bereich der Rahmenabschnitte 9 kann eine beispielsweise mit einer Z-Faltung versehene Verdeckkinematik an eine Abdeckung eines größeren Fahrgastraumes, beispielsweise eines Vier-Sitzer-Fahrzeuges, angepaßt werden, wobei das Verdeckgestell 4 auch mehr als zwei hintereinander angeordnete Gestängeschenkel 6, 7 aufweisen kann. Ebenso ist denkbar, daß bei einer Ausführung jeweiliger Verdeckbereiche zwischen den gegenüberliegenden Gestängeschenkeln mit einer starren Dachhaut bzw. starren Dachplatten (nicht dargestellt) eine variable Verdeckkinematik erreicht werden kann.

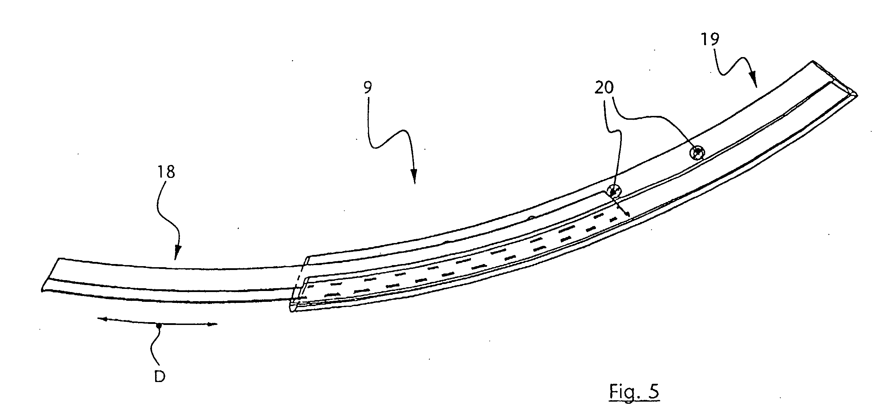

Zur Verlagerung des Rahmenabschittes 9 relativ zum jeweiligen Gestängeschenkel 6 sind diese Bauteile als Verbindungseinheit nach Art einer Zwangsführung ausgebildet. Insbesondere ist der Rahmenabschnitt 9 in Längsrichtung des Gestängeschenkels 6 verschiebbar geführt (Fig. 5).

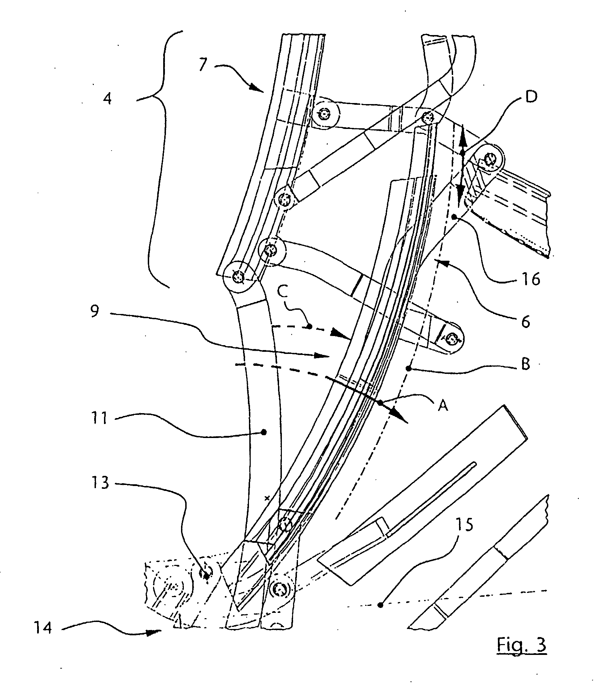

Die Bewegungsphasen des Verdeckgestells 4 gemäß Fig. 2 bis 4 verdeutlichen, daß der jeweilige Rahmenabschnitt 9 mit dem zugeordneten Gestängeschenkel 6 gemeinsam verschwenkbar ist. Bei dieser Schwenkbewegung (Pfeil A) des Verdeckgestells 4 ist der Rahmenabschnitt 9 seinerseits zumindest phasenweise auf einer bogenförmig gekrümmten Längsbahn B (Fig. 3) verschiebbar, wobei diese Längsbahn B im wesentlichen vom Konturenverlauf des zugeordneten Gestängeschenkels 6 bestimmt ist. Denkbar ist dabei auch, daß der Rahmenabschnitt 9 bei der Verdeckbewegung einer dreidimensional verlaufenden Krümmung (nicht dargestellt) der Längsbahn B bzw. des Gestängeschenkels 6 folgt.

Das erfindungsgemäße Verdeckgestell 4 kann an unterschiedliche Größen von Fahrzeugdächern dadurch angepaßt werden, daß mehrere Paare 6, 6'; 7, 7' von jeweils verschiebbare Rahmenabschnitte 9 aufweisenden Gestängeschenkel vorgesehen werden (nicht dargestellt), und damit die zugeordnete der Dachhaut 8 in mehreren Bereichen eine optimale Steuerung, Faltung und Straffung erfährt.

Bei dem gemäß Fig. 1 dargestellten Cabriolet-Fahrzeug 1 ist das Verdeckgestell 4 randseitig mit zwei in Längsrichtung hintereinander angeordneten Gestängeschenkeln 6 und 7 versehen und im Bereich des in Öffnungsrichtung (Pfeil A) hinteren Gestängeschenkel-Paares 6, 6' ist jeweils der verschiebbare Rahmenabschnitt 9 vorgesehen.

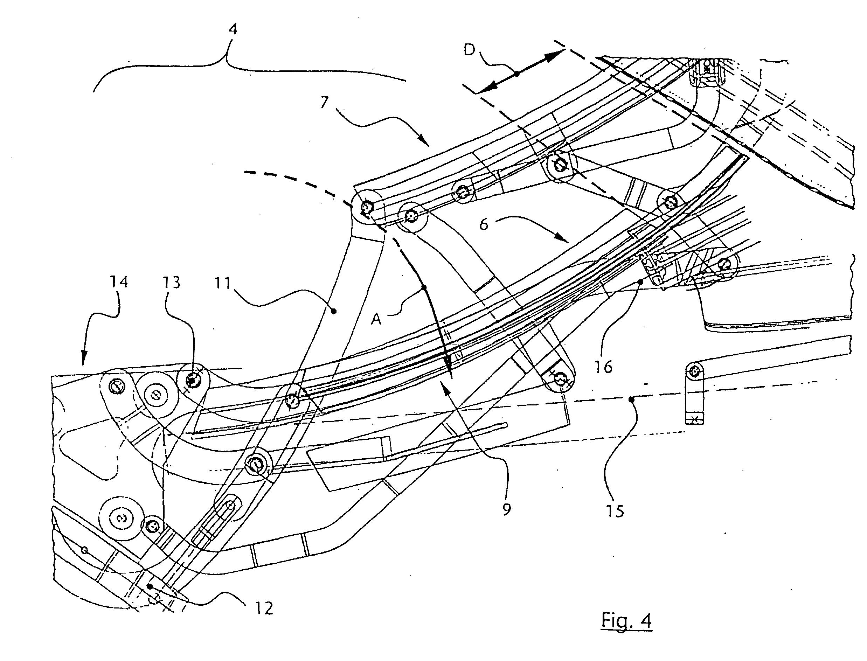

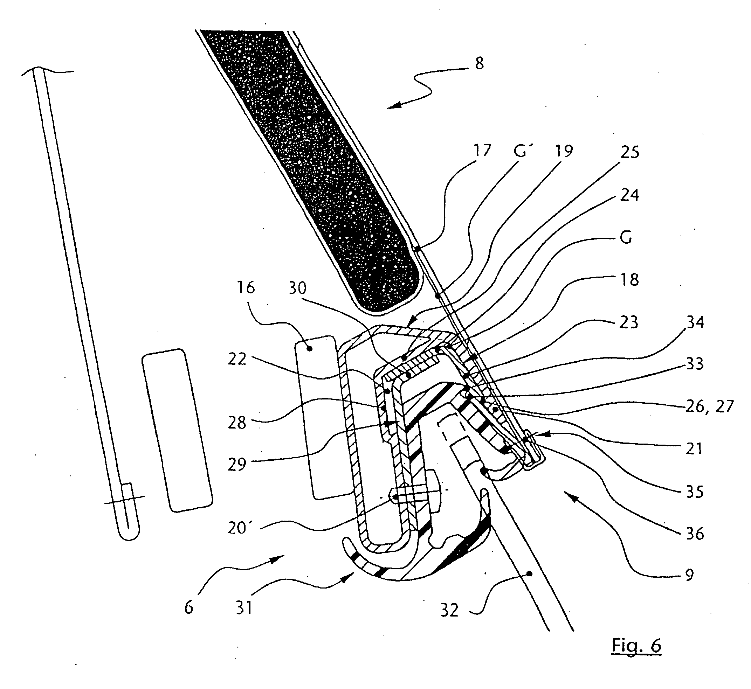

Die Öffnungsphase gemäß Fig. 3 verdeutlicht, daß der allgemein mit 6 bzeichnete Gestängeschenkel eine den Rahmenabschnitt 9 tragende Hauptsäule 16 des Verdeckgestells 4 bildet. Diese Hauptsäule 16 wird bei Bewegung einer an sich bekannten Führungsstange 11 mittels eines Antriebs 12 um ein Stützlager 13 eines heckseitigen Karosserie-Hauptlagers 14 verschwenkt. Aus der in Fig. 2 dargestellten Übereinanderlage werden die Führungsstange 11 und die Hauptsäule 16 bei Einleitung der Verdeckbewegung A in die mit Pfeil C, Fig. 3 veranschaulichte Spreizdarstellung verschwenkt. Dabei wird gleichzeitig im Bereich des Rahmenabschnitts 9 eine mit einer Pfeilrichtung D dargestellte Relativbewegung erzeugt, mittels der die nicht näher dargestellte Dachhaut 8 (Fig. 6) bei weiterer Verlagerung zum Heckbereich des Fahrzeugs 1 hin im Nahbereich einer Brüstungslinie 15 gesteuert abgelegt (Fig. 4) wird. Bei einer nachfolgenden Schließbewegung des Verdeckgestells 4 mit dem Verdeck 2 erfolgt eine Verlagerung des Rahmenabschnitts 9 und der Teile des Gestängeschenkels 6 in umgekehrter Reihenfolge.

Die Schnittdarstellung gemäß Fig. 6 verdeutlicht die konstruktiven Einzelteile der vorbeschriebenen Verbindungseinheit am Gestängeschenkel 6. Der verschiebbare Rahmenabschnitt 9 ist in vorteilhafter Ausführung als eine mehrteilige Baueinheit ausgebildet, die eine außenseitig mit dem Verdeckstoff 17 der Dachhaut 8 verbundene Haltestrebe 18 aufweist. Diese Haltestrebe 18 ist ihrerseits auf einer am Gestängeschenkel 6 festgelegten Führungsschiene 19 abgestützt, wobei diese beiden Teile 18 und 19 zumindest bereichsweise durch eine Gleitführung bei G längsverschiebbar verbunden sind. Ebenso ist denkbar, daß die längsverschiebbaren Teile 18 und 19 über eine Rollenführung o. dgl. verbunden sind (nicht dargestellt).

In Fig. 5 ist der Rahmenabschnitt 9 als die zweiteilige Baueinheit in einer Einzeldarstellung verdeutlicht, wobei die Haltestrebe 18 im linken Bildbereich aus der Führungsschienen 19 herausbewegt ist, die im Bereich von Schraubverbindungen 20 mit dem nichtdargestellten Gestängeschenkel 6 (bzw. Hauptsäule 16, Fig. 6) verbunden sein kann.

Die Führungsschiene 19 ist im Querschnitt als ein U-Profilteil ausgebildet, in deren in Schließstellung (Fig. 6) nach unten gerichtete Aufnahmerinne 22 die als ein L-Profilteil ausgebildete Haltestrebe 18 so eingreift, daß eine formschlüssige Verbindung gebildet ist. Die Haltestrebe 18 ist einerseits unter Anlage ihres langen Schenkels 23 an der Innenseite des äußeren U-Profilschenkels 21 in der Aufnahmerinne 22 abgestützt und andererseits ist die Haltestrebe 18 mit ihrem kurzen Schenkel 24 gleitbeweglich bei G im Bereich eines Basisschenkels 25 der Führungsschiene 19 geführt.

Der lange Schenkel 23 der Haltestrebe 18 ist mit einer Absatzkontur 26 versehen, die an einer entsprechend komplementär geformten Hakenkontur 27 an der Innenseite des äußeren U-Profilschenkels der Führungsschiene 19 so anliegt, daß sich die beiden Formteile als zusätzliche Führungskontur hintergreifen. Zur Führung und Abstützung der Haltestrebe 18 im Bereich des Basisschenkels 25 (Gleitführung G) ist in der Aufnahmerinne 22 ein am inneren U-Profilschenkel 28 festgelegte und als ein L-Profil geformte Stützschiene 29 vorgesehen, deren kurzer Schenkel 30 den kurzen Schenkel 24 der Haltestrebe 18 untergreift. Mit dieser Verbindungskonstruktion kann die die Dachhaut 8 tragende Haltestrebe 18 entsprechend der in Fig. 3 und 4 dargestellten Bewegung (Pfeil D) relativ zur Führungsschiene 19 verlagert werden.

Anstelle der vorbeschriebenen Verbindungskonstruktion ist denkbar, daß die Führungsschiene 19 und die Haltestrebe 18 von zwei unmittelbar ineinanderschiebbaren Strangprofilen (nicht dargestellt) gebildet sind und damit der Aufbau der Verbindungskonstruktion vereinfacht ist.

Die Darstellung gemäß Fig. 6 zeigt außerdem, daß in der Führungsschiene 19 ein in deren U-Profil eingepaßter Dichtungsstrang 31 vorgesehen ist, in den ein Fondscheibe 32 einschiebbar ist. Der Dichtungsstrang 31 ist über eine Schraubverbindung 20' mit der Führungsschiene 19 verbunden und an einer Absatzkontur 33 liegt der Dichtungsstrang 31 mit einer Rastnase 34 so an, daß der Dichtungsstrang 31 positionsgenau in der Aufnahmerinne 22 zwischen den Teilen 18 und 19 gehalten ist.

In vorteilhafter Ausführung ist zwischen der Haltestrebe 18 und der Führungsschiene 19 eine Gleitbeschichtung vorgesehen. Diese kann sowohl bei G und/oder im Nahbereich einer Anbindung 35 des Verdeckstoffes 17 an dem langen Schenkel 23 der Haltestrebe 18 in die Verbindungskonstruktion integriert sein. In Fig. 6 ist eine Gleitbeschichtung G' dargestellt, die an der Innenseite des Verdeckstoffes 17 als eine Gleitfläche am äußeren U-Profilschenkel 21 der Führungsschiene 19 vorgesehen ist. Bei leichter Verschiebbarkeit (Pfeil D) ist damit ein Verschleiß der aufeinander gleitenden Bauteile vermieden.

Der Verdeckstoff 17 ist im Bereich der Anbindung 35 über eine Naht 36 mit der Haltestrebe 18 verbunden. Ebenso ist als Anbindung 35 eine Schweißverbindung denkbar. Oberhalb der Anbindung 35 kann der Profilschenkel 21 der Führungsschiene 19 bei der Montage der Teile nach Art einer Zunge in die dargestellte Einbaulage zwischen die Gleitschicht G' und die Haltestrebe 18 eingeschoben werden, so daß die Verbindung im Bereich der Hinterschneidungsprofile 26, 27 einrastet.

## Patentansprüche

1. Faltverdeck für ein Cabriolet-Fahrzeug, das ein aus einer vorderen, am Windschutzscheibenrahmen anliegenden Schließstellung in eine heckseitige Öffnungsstellung schwenkbares Verdeckgestell(4) mit paarweise symmetrisch zur Längsmittelebene (5) gegenüberliegenden Gestängeschenkeln (6, 6'; 7, 7') aufweist, an denen insbesondere eine flexible Dachhaut (8) des Verdecks (2) gehalten ist, **dadurch gekennzeichnet, daß** das Verdeckgestell (4) im Bereich zumindest eines Paares gegenüberliegender Gestängeschenkel (6, 6') jeweils mit einem bei der Öffnungs- bzw. Schließbewegung (Pfeil A) relativ zu diesen verlagerbaren Rahmenabschnitt (9) zur Halterung des Verdecks (2) versehen ist.

2. Faltverdeck nach Anspruch 1, **dadurch gekennzeichnet, daß** der jeweilige Gestängeschenkel (6) durch eine Zwangsführung mit dem Rahmenabschnitt (9) verbunden und dieser in Längsrichtung (B) des Gestängeschenkels (6) verschiebbar geführt ist.

3. Faltverdeck nach Anspruch 1 oder 2, **dadurch gekennzeichnet**, der jeweilige Rahmenabschnitt (9) mit dem zugeordneten Gestängeschenkel (6) gemeinsam verschwenkbar ist und dabei der Rahmenabschnitt (9) zumindest phasenweise auf einer bogenförmig gekrümmten Längsbahn (B) verschiebbar ist.

4. Faltverdeck nach einem der Ansprüche 1 bis 3, **dadurch gekennzeichnet, daß** das Verdeckgestell (4) randseitig mit mehreren Paaren (6, 6'; 7, 7') von jeweils verschiebbare Rahmenabschnitte (9) aufweisenden Gestängeschenkeln versehen ist.

5. Faltverdeck nach einem der Ansprüche 1 bis 4, **dadurch gekennzeichnet, daß** das Verdeckgestell (4) randseitig zwei paarweise gegenüberliegende Gestängeschenkel (6, 6'; 7, 7') aufweist und im Bereich des in Öffnungsrichtung hinteren Gestängeschenkel-Paares (6, 6') die beiden verschiebbaren Rahmenabschnitte (9) vorgesehen sind.

6. Faltverdeck nach einem der Ansprüche 1 bis 5, **dadurch gekennzeichnet, daß** der jeweilige Rahmenabschnitt (9) als eine mehrteilige Baueinheit ausgebildet ist, die eine außenseitig mit dem Verdeckstoff (17) der Dachhaut (8) verbundene Haltestrebe (18) aufweist, die ihrerseits auf einer am Gestängeschenkel (6; Hauptsäule 16) festgelegten Führungsschiene (19) abgestützt ist und diese beiden Teile (18, 19) zumindest bereichsweise durch eine Gleit- und/oder Rollenführung (G) längsverschiebbar verbunden sind.

7. Faltverdeck nach Anspruch 6, **dadurch gekennzeichnet, daß** die Führungsschiene (19) im Querschnitt als ein U-Profilteil (21, 25, 28) ausgebildet ist und in deren in Einbaulage nach unten gerichtete Aufnahmerinne (22) die als ein L-Profilteil ausgebildete Haltestrebe (18) so eingreift, daß eine formschlüssige Verbindung gebildet ist.

8. Faltverdeck nach Anspruch 6 oder 7, **dadurch gekennzeichnet, daß** die Haltestrebe (18) einerseits unter Anlage ihres langen Schenkels (23) an der Innenseite des äußeren U-Profilschenkels (21) und andererseits am Basisschenkel (25) des U-Profilteils mit ihrem kurzen Schenkel (24) gleitbeweglich in der Aufnahmerinne (22), der Führungsschiene (19) abgestützt ist.

9. Faltverdeck nach einem der Ansprüche 6 bis 8, **dadurch gekennzeichnet, daß** der lange Schenkel (23) der Haltestrebe (18) mit einer Absatzkontur (26) versehen ist, die eine Hakenkontur (27) an der Innenseite des äußeren U-Profilschenkels (21) der Führungsschiene (19) hintergreift.

10. Faltverdeck nach einem der Ansprüche 6 bis 9, **dadurch gekennzeichnet, daß** in der Aufnahmerinne (22) eine am inneren U-Profilschenkel (28) festgelegte und als L-Profil geformte Stützschiene (29) vorgesehen ist, deren kurzer Schenkel (30) den kurzen Schenkel (24) der L-förmigen Haltestrebe (18) untergreift.

11. Faltverdeck nach einem der Ansprüche 1 bis 10, **dadurch gekennzeichnet, daß** die Führungsschiene (19) und die Haltestrebe (18) von zwei unmittelbar ineinanderschiebbaren Strangprofilen gebildet sind.

12. Faltverdeck nach einem der Ansprüche 1 bis 11, **dadurch gekennzeichnet, daß** die zwangsgeführten Teile des Rahmenabschnitts (9) in ihrem Berührungsbereich mit einer Gleitbeschichtung (G, G') versehen sind.

13. Faltverdeck nach einem der Ansprüche 1 bis 12, **dadurch gekennzeichnet, daß** der Rahmenabschnitt (9) im Bereich seiner Führungsschiene (19) einen in deren U-Profil eingepaßten Dichtungsstrang (31) aufweist.

14. Faltverdeck nach Anspruch 13, **dadurch gekennzeichnet, daß** der Dichtungsstrang (31) über eine Schraubverbindung (20') mit der Führungsschiene (19) verbunden ist und an der Absatzkontur (27) der Haltestrebe (18) eine Rastnase (34) des Dichtungsstrangs (31) anliegt.

15. Faltverdeck nach einem der Ansprüche 1 bis 14, **dadurch gekennzeichnet, daß** zwischen der Haltestrebe (18) und der Führungsschienen (19) eine Gleitbeschichtung (G) vorgesehen ist.

16. Faltverdeck nach einem der Ansprüche 1 bis 15, **dadurch gekennzeichnet, daß** zwischen dem äußeren U-Profilschenkel (21) der Führungsschiene (19) und der Dachhaut (17) eine Gleitschicht (G') vorgesehen ist.

17. Faltverdeck nach einem der Ansprüche 1 bis 16, **dadurch gekennzeichnet, daß** der hintere Gestängeschenkel (6) mit dem zugeordneten Rahmenabschnitt (9) eine Hauptsäule (16) des heckseitig angetriebenen Verdeckgestells (4) bildet.

## Claims

1. Folding top for a convertible vehicle, which exhibits a top frame (4) capable of pivoting out of a front closed position in contact with the windscreen frame into an open position at the rear, with rod limbs (6, 6 ; 7, 7') arranged in pairs symmetrically opposite the longitudinal central plane (5), on which is retained in particular a flexible top skin (8) of the top (2), **characterised in that** the top frame (4) is provided in the area of at least one pair of mutually opposed rod limbs (6, 6'), in each case with a frame section (9) for holding the top (2), capable of being moved relative to these during the opening or closing movement respectively (arrow A).

2. Folding top according to claim 1, **characterised in that** the rod limb (6) in each case is connected by a positively driven arrangement to the frame section (9), and that this is guided such as to be displaceable in the longitudinal direction (B) of the rod limb (6).

3. Folding top according to claim 1 or 2, **characterised in that** the individual frame section (9) is pivotable jointly with the rod limb (6) allocated to it, and in this situation the frame section (9) is capable of being moved at least in phases along an arc-shaped curved trajectory (B).

4. Folding top according to one of claims 1 to 3, **characterised in that** the top frame (4) is provided on the peripheral sides with several pairs (6, 6'; 7, 7') of rod limbs which exhibit movable frame sections (9).

5. Folding top according to one of claims 1 to 4, **characterised in that** the top frame (4) exhibits on the peripheral side two rod limbs (6, 6'; 7, 7') located opposite one another pair by pair, and the two movable frame sections (9) are provided in the area of the rod limb pair (6,6') which are to the rear in the opening direction.

6. Folding top according to one of claims 1 to 5, **characterised in that** the frame section (9) in each case is designed as a multi-part structural unit, which exhibits a retaining brace (18) connected on the outside to the top material (17) of the roof skin (8), said brace being in turn supported on a guide rail (19) secured to the rod limb (6; main column 16), and these two parts (18, 19) are connected at least in areas by a sliding and/or rolling guide (G) in a longitudinally displaceable manner.

7. Folding top according to claim 6, **characterised in that** the guide rail (19) is designed in cross-section as a U-profile part (21, 25, 28), and in the accommodation groove (22) of which, directed downwards in the installed position, the retaining brace (18), designed as an L-profile part, engages in such a way that a positive fit connection is formed

8. Folding top according to claim 6 or 7, **characterised in that** the retaining brace (18) is supported on the one side, with its long limb (21) in contact on the inner side of the outer U-profile limb (21), and, on the other side, is supported on the base limb (25) of the U-profile part with its short limb (24) being capable of sliding movement in the accommodation groove (22) of the guide rail (19).

9. Folding top according to one of Claims 6 to 8, **characterised in that** the long limb (23) of the retaining brace (18) is provided with an offset contour (26), which engages behind a hook contour (27) on the inside of the outer U-profile limb (21) of the guide rail (19).

10. Folding top according to one of claims 6 to 9, **characterised in that** a support rail (29), secured to the inner U-profile limb (28) and shaped as an L-profile, is provided in the accommodation groove (22), the short limb (30) of which engages beneath the short limb (24) of the L-shaped retaining brace (18).

11. Folding top according to one of claims 1 to 10, **characterised in that** the guide rail (19) and the retaining brace (18) are formed from two extruded sections capable of sliding directly into one another.

12. Folding top according to one of claims 1 to 11, **characterised in that** the force-guided parts of the frame section (9) are provided in their contact area with a slide coating (G; G').

13. Folding top according to one of claims 1 to 12, **characterised in that** the frame section (9) exhibits in the area of its guide rail (19) a sealing strand (31) fitted into its U-profile.

14. Folding top according to claim 13, **characterised in that** the sealing strand (31) is connected by means of a screw connection (20') to the guide rail (19) and that an engagement nose element (14) of the sealing strand (31) is in contact at the offset contour (27) of the retaining brace (18).

15. Folding top according to one of claims 1 to 14, **characterised in that** a slide coating (G) is provided between the retaining brace (18) and the guide rails (19).

16. Folding top according to one of claims 1 to 15, **characterised in that** a slide coating (G) is provided between the outer U-profile limb (21) of the guide rail (19) and the roof skin (17).

17. Folding top according to one of claims 1 to 16, **characterised in that** the rear rod limb (6) forms, with the frame section (9) allocated to it, a main column (16) of the top frame (4) driven on the rear side.

## Revendications

1. Capote pliante pour un véhicule cabriolet qui présente un cadre de capote (4) pouvant pivoter d'une position de fermeture avant reposant contre un encadrement de pare-brise en une position d'ouverture côté arrière, comportant des montants de tringlerie (6, 6' ; 7, 7') figurant face à face par paires, symétriquement au plan moyen longitudinal (5), auxquels, en particulier, une couverture de toit souple (8) de la capote (2) est maintenue,
**caractérisée en ce que**
le cadre de capote (4), dans la zone d'au moins une paire de montants de tringlerie (6, 6') figurant face à face, est pourvu, chaque fois, d'une section de cadre (9) pour le maintien de la capote (2) déplaçable relativement à ceux-ci lors du mouvement d'ouverture ou de fermeture (flèche A).

2. Capote pliante selon la revendication 1,
**caractérisée en ce que**
le montant de tringlerie (6) correspondant est relié par un guidage forcé avec la section de cadre (9) et celui-ci est guidé de façon coulissante dans la direction longitudinale (B) du montant de tringlerie (6).

3. Capote pliante selon la revendication 1 ou 2,
**caractérisée en ce que**
la section de cadre (9) correspondante peut pivoter en même temps que le montant de tringlerie (6) affecté et la section de cadre (9) peut coulisser dans une trajectoire longitudinale (B) courbée en forme d'arc, au moins par phases.

4. Capote pliante selon l'une quelconque des revendications 1 à 3,
**caractérisée en ce que**
le cadre de capote (4) est pourvu en son bord de plusieurs paires (6, 6'; 7, 7') de montants de tringlerie présentant des sections de cadre (9) chaque fois coulissantes.

5. Capote pliante selon l'une quelconque des revendications 1 à 4,
**caractérisée en ce que**
le cadre de capote (4) présente en son bord deux montants de tringlerie (6, 6' ; 7, 7') figurant face à face par paires et dans la zone des paires de montants de tringlerie (6, 6') arrière en direction d'ouverture sont prévues les deux sections de cadre (9) coulissantes.

6. Capote pliante selon l'une quelconque des revendications 1 à 5,
**caractérisée en ce que**
la section de cadre (9) correspondante est constituée en tant que module de plusieurs pièces qui présente une entretoise de maintien (18) reliée côté extérieur avec le matériau de capote (17) de la couverture de toit (8), qui, de son côté, est appuyée contre un rail de guidage (19) fixé au montant de tringlerie (6 ; colonne principale 16), et ces deux pièces (18, 19) sont reliées de manière coulissante dans le sens longitudinal, au moins par zone, par un guidage à rouleau et/ou glissant G.

7. Capote pliante, selon la revendication 6,
**caractérisée en ce que**
le rail de guidage (19) est formé en section en tant que pièce profilée en U (21, 25, 28) et que l'entretoise de maintien (18) formée en tant que pièces profilées en L s'engage dans sa rainure de réception (22) dirigée vers le bas en position de montage de manière telle qu'une liaison en adaptation de forme est réalisée.

8. Capote pliante selon la revendication 6 ou 7,
**caractérisée en ce que**
l'entretoise de maintien (18), d'une part, par appui de son montant long (23) au côté intérieur du montant profilé en U (21) et, d'autre part, au montant de base (25) de la pièce profilée en U par son montant court (24), est supportée de façon à pouvoir se mouvoir en glissant dans la rainure de réception (22) du rail de guidage (19).

9. Capote pliante selon l'une quelconque des revendications 6 à 8,
**caractérisée en ce que**
le montant long (23) de l'entretoise de maintien (18) est pourvu d'un contour de réduction (26) qui engage par derrière un contour en crochet (27) au côté intérieur du montant profilé en U (21) extérieur du rail de guidage (19).

10. Capote pliante selon l'une quelconque des revendications 6 à 9,
**caractérisée en ce que**,
dans la rainure de réception (22) est prévu un rail d'appui (29) formé en profilé en L, fixé au montant profilé en U intérieur (28), dont le montant plus court (30) engage par-dessous le montant court (24) de l'entretoise de maintien (18) en forme de L.

11. Capote pliante selon l'une quelconque des revendications 1 à 10,
**caractérisée en ce que**
le rail de guidage (19) et l'entretoise de maintien (18) sont formés de deux barres profilées pouvant directement coulisser l'une dans l'autre.

12. Capote pliante selon l'une quelconque des revendications 1 à 11,
**caractérisée en ce que**
les pièces de guidage formé de la section de cadre (9) sont pourvues d'une couche de glissement (G, G') en leur zone de contact.

13. Capote pliante selon l'une quelconque des revendications 1 à 12,
**caractérisée en ce que**
la section de cadre (9) présente dans la zone de son rail de guidage (19) une barre d'étanchéité (31) adaptée dans son profilé en U.

14. Capote pliante selon la revendication 13,
**caractérisée en ce que**
la barre d'étanchéité (31) est reliée par une liaison à vis (20') avec le rail de guidage (19) et au contour de réduction (27) de l'entretoise de maintien (18) repose un nez d'encliquetage (34) de la barre d'étanchéité (31).

15. Capote pliante selon l'une quelconque des revendications 1 à 14,
**caractérisée en ce que**,
entre l'entretoise de maintien (18) et les rails de guidage (19), une couche de glissement (G) est prévue.

16. Capote pliante selon l'une quelconque des revendications 1 à 15,
**caractérisée en ce que**,
entre le montant de profilé en U (21) extérieur du rail de guidage (19) et la couverture de toit (17), une couche de glissement (G') est prévue.

17. Capote pliante selon l'une quelconque des revendications 1 à 16,
**caractérisée en ce que**
le montant de tringlerie arrière (6) forme, avec la section de cadre (9) affectée, une colonne principale (16) du cadre de capote (4) entraîné côté arrière.
